# EUROPEAN PATENT APPLICATION

(11) **EP 2 363 801 A1**
(43) Date of publication of application: **07.09.2011**
(21) Application number: 11151221.6
(22) Date of filing: 18.01.2011
(51) Int. Cl.: G06F 9/44, H04N 1/00

(54) **Image forming apparatus and method for providing manual thereof**

(30) Priority: 05.03.2010 KR 20100019988
(71) Applicant: SAMSUNG ELECTRONICS CO., LTD., Suwon-si, Gyeonggi-do (KR)
(72) Inventor: Lee, So-young, Seoul (KR); Cho, Young-ei, Seoul (KR); Jang, Dae-yeon, Gyeonggi-do (KR)
(74) Representative: Bruce, Alexander Richard Henry

(57) **Abstract**

An image forming apparatus is provided. The image forming apparatus includes a reception unit which receives an application and a manual for the application; a storage unit which converts the received manual to a format displayable on the image forming apparatus, and stores the converted manual and the application; and a control unit which, if a command to request the built-in manual or the converted manual is input, loads a manual corresponding to the command, and controls a display unit to display the loaded manual. Therefore, a manual provided by a third party may be added to an image forming apparatus.

## Description

The present invention relates to an image forming apparatus and a method for providing a manual thereof, and more particularly, to an image forming apparatus which applies an open source application provided by a third party and a method for providing a manual thereof.

An image forming apparatus refers to a device which generates, prints, receives, and transmits image data. Such an image forming apparatus may be a printer, a scanner, a copy machine, a fax machine, or an MFP (multifunction peripheral) which integrates functions of these in one device.

A conventional image forming apparatus cannot download and use an application developed by a third party.

However, with the recent development of an open platform environment based on open source software, an image forming apparatus can download an application provided by a third party and thus provide a user with the application.

If an application provided by a third party is directly uploaded to an image forming apparatus, a manual, that is Help content, for the application is also needed.

Therefore, there is a need for methods which allows a user to use an application provided by a third party together with a manual of the application for an image forming apparatus. In addition, a method for adding a manual provided by a third party or a method for continuously maintaining or managing a recently updated manual is required. A method for a user to be provided with manual information conveniently is also required.

Exemplary embodiments address at least the above problems and/or disadvantages and other disadvantages not described above. Also, the present invention is not required to overcome the disadvantages described above, and an exemplary embodiment may not overcome any of the problems described above.

The embodiments provide an image forming apparatus which adds and manages a manual provided by various providers such as a third party and a method for providing a manual thereof.

According to an exemplary aspect, there is provided a method for providing a manual of an image forming apparatus where a built-in application and a built-in manual for the built-in application are stored, the method including receiving an application and a manual for the application; converting the received manual to a format displayable on the image forming apparatus, and storing the converted manual and the application; loading, if a command to request the built-in manual or the converted manual is input, a manual corresponding to the command; and displaying the loaded manual.

The application manual may be plural.

The receiving may receive the application and the application manual from a host device which is connected over a network or a storage medium which is connected to the image forming apparatus.

The storing may include registering and storing the converted manual as an open service gateway initiative (OSGI) bundle.

The method may further include installing the received application and the received manual using a Par (Parity archive) package.

The loading may include determining whether a manual which conforms to information on an application corresponding to the command is stored; and loading a requested manual from among the stored manuals according to the determination.

The loading may include, if it is determined that a manual which conforms to the application information is not stored, automatically loading (a first page of) a default manual.

The loading may include prioritizing displaying the application information, and then loading the manual according to the priority.

The application information may include at least one of a name, a version, a provider, and a page.

The method may further include, if a command to combine manuals is input, combining the default manual with the loaded manual; and displaying the combined manual.

According to another exemplary aspect, there is provided an image forming apparatus where a built-in application and a built-in manual for the built-in application are stored, the image forming apparatus including a reception unit which receives an application and a manual for the application; a storage unit which converts the received manual to in a format displayable on the image forming apparatus, and stores the converted manual and the application; and a control unit which, if a command to request the built-in manual or the converted manual is input, loads a manual corresponding to the command, and controls a display unit to display the loaded manual.

The application manual may be plural.

The reception unit may receive the application and the application manual from a host device which is connected over a network or a storage medium which is connected to the image forming apparatus.

The storage unit may register and store the converted manual as an open service gateway initiative (OSGI) bundle.

The control unit may install the received application and the received manual using a Par package.

The control unit may determine whether a manual which conforms to information on an application corresponding to the command is stored, and load a requested manual from among the stored manuals according to the determination.

If it is determined that a manual which conforms to the application information is not stored, the control unit may (automatically) load (a first page of) a default manual.

The control unit may prioritize displaying the application information, and then load the manual according to the priority.

The application information may include at least one of a name, a version, a provider, and a page.

If a command to combine manuals is input, the control unit may combine the default manual with the loaded manual, and control the display unit to display the combined manual.

The above and/or other aspects of the present invention will be more apparent by describing certain exemplary embodiments of the present invention with reference to the accompanying drawings, in which:
FIG. 1 is a block diagram illustrating an image forming apparatus according to an exemplary embodiment;
FIG. 2 is a view provided to explain the operating principle of an image forming apparatus according to an exemplary embodiment;
FIG. 3 is a detailed block diagram illustrating an image forming apparatus of FIG. 1;
FIG. 4 is a flowchart provided to explain an operation of an image forming apparatus according to an exemplary embodiment; and
FIG. 5 is a view illustrating an example in which an application and an application manual are stored in a storage unit;
FIG. 6 is a view provided to explain the operation of Par package according to an exemplary embodiment;
FIG. 7 is a view provided to explain the operating principle of an image forming apparatus according to an exemplary embodiment;
FIG. 8 is a view illustrating the detailed structure of a manual which can be displayed on an image forming apparatus;
FIG. 9 is a view illustrating a display unit according to an exemplary embodiment;
FIGs. 10A and 10B are views illustrating examples of displaying a manual on a display unit according to an exemplary embodiment;
FIGs. 11A and 11B are views provided to explain the operation that a display unit combines manuals according to an exemplary embodiment;
FIGs. 12A and 12B are views provided to explain the operation that a display unit prints a manual according to an exemplary embodiment; and
FIG. 13 is a flowchart provided to explain a method for providing a manual of an image forming apparatus according to an exemplary embodiment.

Certain exemplary embodiments will now be described in greater detail with reference to the accompanying drawings.

In the following description, the same drawing reference numerals are used for the same elements even in different drawings. The matters defined in the description, such as detailed construction and elements, are provided to assist in a comprehensive understanding. Thus, it is apparent that the embodiments can be carried out without those specifically defined matters. Also, well-known functions or constructions are not described in detail since they would obscure the invention with unnecessary detail.

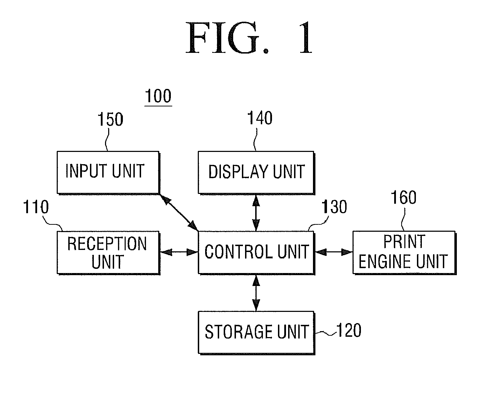

FIG. 1 is a block diagram illustrating an image forming apparatus according to an exemplary embodiment.

An image forming apparatus 100 according to the exemplary embodiment may include a plurality of manuals for a particular application. In particular, a manual for an application provided by a third party may be converted to be in a format applicable to the image forming apparatus 100.

Referring to FIG. 1, the image forming apparatus 100 includes a reception unit 110, a storage unit 120, a control unit 130, a display unit 140, an input unit 150, and a print engine unit 160.

The reception unit 110 receives an application and a manual for the application. Herein, the application and the manual may be received from an external device such as a host device (not shown) by a user, or provided by a third party.

The reception unit 110 may receive an application and a manual for the application from a host device (not shown) which is connected over various wired or wireless networks. In this case, the reception unit 100 may be implemented as a network interface.

The reception unit 110 may receive an application and a manual for the application from a storage unit, such as a universal serial bus (USB) memory, which is connected to the image forming apparatus 100. In this case, the reception unit 110 may be implemented as an interface, such as a USB connector.

The application according to the exemplary embodiment may be provided in various forms which can be applied to the image forming apparatus 100, and may include, for example, an application which presents various functions such as 'COPY', 'SCAN', 'ID COPY', and 'SCAN TO E-MAIL' on a liquid crystal display (LCD) window of the image forming apparatus 100. The application may be generated using a web-based language, such as HyperText Markup Language (HTML) or a JAVA language.

The application may include a built-in application which is provided when the manufacturer releases the image forming apparatus 100 and an application which is generated by a third party in various formats in an open source platform environment.

The application manual may provide Help content (information) regarding the application such as a manual for the application which provides 'COPY' function, for example.

The image forming apparatus 100 according to the exemplary embodiment may include a built-in application having a plurality of application manuals and an application provided by a third party a plurality of application manuals.

The storage unit 120 may store various types of data such as print data, a meta file, address information, and function file, and also store an application, an application manual, application information, and so on.

The storage unit 120 may store data in a specific folder type. If a Par package is used, an application and an application manual may be stored in a single folder.

To be specific, the storage unit 120 converts a received manual to a format displayable on the image forming apparatus 100, and then stores the converted manual and an application.

By doing so, a manual provided by a third party may be used in the image forming apparatus 100 regardless of the type of manual.

The information on the application stored in the storage unit 120 may include at least one of an application name, a version, a provider, and a page. The application name may include, for example, 'COPY', 'ID COPY', and 'SCAN'; the version may include, for example, 1.0, 1.1, and so on in the order of being provided; the provider may include, for example, an image forming apparatus manufacturer or a third party; and the page may include, for example, information on a page of an application manual.

The control unit 130 controls overall operations of the image forming apparatus 100. Specifically, if a command to request a built-in manual or a manual provided by a third party is input by a user, the control unit 130 causes the manual corresponding to the command to be loaded, and controls the display unit 140 to display the loaded manual.

The control unit 130 may control a conversion tool to convert the received manual to a format displayable on the image forming apparatus 100. In this case, a conversion operation may be performed according to the control of the control unit 130 or performed through a manipulation by a user.

The display unit 140 may display an application and an application manual. The display unit 140 may include an LCD window which is provided on a region of the image forming apparatus 100. However, the window may be an LED window or other type of window.

The input unit 150 may receive a command from a user. The input unit 150 may be implemented as a manipulation panel having a plurality of keys, such as a Help key, a numerical key, a direction key, a selection key, and so on.

The display unit 140 and the input unit 150 may be provided together, and the display unit 140 may perform the function of the input unit 150 since the display unit 140 may be configured as a touchscreen receiving a user's command.

If print data is received from the host device, the print engine unit 160 prints the received print data.

The image forming apparatus 100 according to the exemplary embodiment may include a printer, a fax machine, a scanner, a copy machine, or an MFP which provides a manual through a screen of the display unit 140. If the image forming apparatus 100 is provided as a scanner, the image forming apparatus 100 may further include a scanning unit (not shown), and if the image forming apparatus 100 is provided as the another device, such as a fax machine or an MFP, the image forming apparatus 100 may also further include a corresponding function unit.

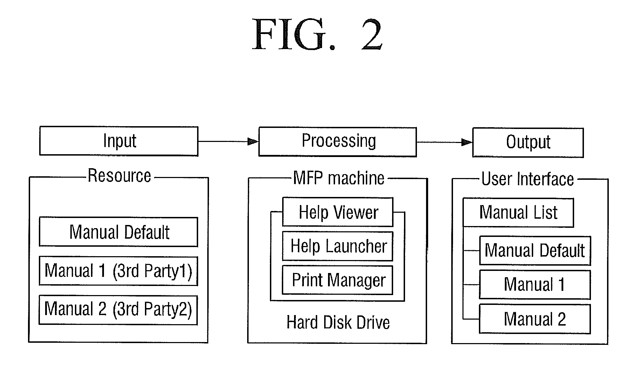

FIG. 2 is a view provided to explain the operating principle of an image forming apparatus according to an exemplary embodiment.

Referring to FIG. 2, a resource, such as a manual, may include a default manual which is a built-in manual in the image forming apparatus 100, a first manual provided by a third party, and a second manual provided by another third party.

The default manual may be changed by a user, and a manual which is set as a default manual may be input to the image forming apparatus 100.

The MFP which is an example of the image forming apparatus 100 may receive a manual.

The image forming apparatus 100 may convert a file format of the manual to recognize the manual. The image forming apparatus 100 may display at least one list of manuals on the display unit 140. The above operation may be performed by a Help viewer including a Help launch and a Help manager.

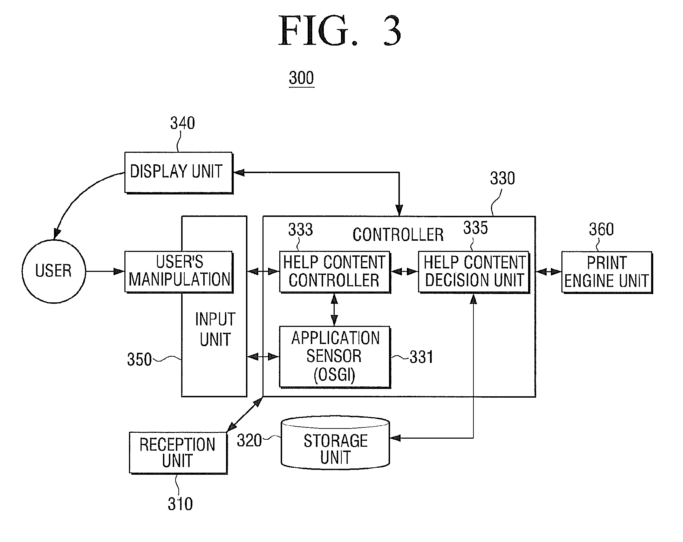

FIG. 3 is a detailed block diagram illustrating the image forming apparatus of FIG. 1. Referring to FIG. 3, the image forming apparatus 300 may include a reception unit 310, a storage unit 320, a control unit 330, a display unit 340, an input unit 350, and a print engine unit 360. The control unit 330 may include a help content controller 333, help content decision unit 335, and application sensor 331.

The above units 310 to 360 may perform the same operations as the operations of the units 110 to 160 of FIG. 1. Accordingly, the following explanations will be focused on the structure of FIG. 3.

The input unit 310 may receive a command from a user by a touch of an application displayed on the display unit 340 or by a manipulation of a manual key provided on a manipulation panel (not shown) of the input unit 350.

If a user inputs a command for an application, the application sensor 331 may recognize the application. Herein, the application sensor 331 may recognize a currently used application or an application selected by a user. Such a recognition may be performed periodically or the command input by the user.

The application sensor 331 may recognize a currently used application or an application such as application A (ver 1.0) or application B (ver 1.5) selected by a user based on an open services gateway initiative (OSGi) environment, for example.

The Help content controller 333 checks a name and a version of the recognized application, and determines whether the application is a previously used application or an application provided by a third party.

The Help content decision unit 335 may load a manual which is requested by a user from the storage unit 320 having pre-stored manuals.

The display unit 340 may display the loaded manual.

Accordingly, the image forming apparatus 300 may additionally use the manual provided by a third party.

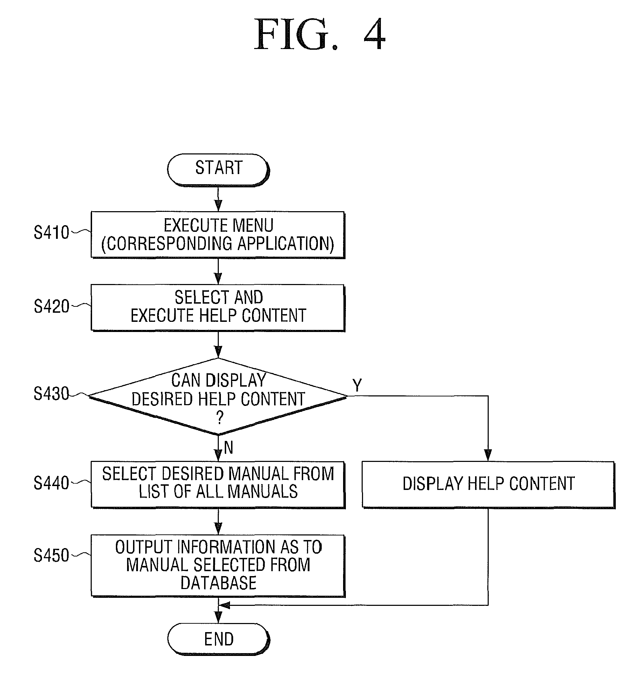

FIG. 4 is a flowchart provided to explain an operation of an image forming apparatus according to an exemplary embodiment.

Referring to FIGs. 3 and 4, the image forming apparatus 300 executes an application in response to the command input through the input unit 350 (S410), and selects and executes a manual, that is, Help content, which provides an explanation for the operation of the application (S420).

The control unit 330 determines whether the image forming apparatus 300 is capable of displaying a desired menu or not (S430).

If the control unit 330 determines that the image forming apparatus 300 can display a desired menu on the display unit 340, the image forming apparatus 300 may display the desired menu automatically (S430-Y).

If it is determined that the image forming apparatus 300 cannot display a desired menu on the display unit 340 (S430-N), the display unit 340 may display a list of all manuals, and then a user may select a desired manual from the list (S440).

Then, the image forming apparatus 300 retrieves the selected manual from a database, that is, the storage unit 320, and outputs information as to the manual on the display unit 340 (S450).

Unlike operation S430-Y of displaying a desired manual automatically, operations S430-N, S440, and S450 represent the process that a user manually selects a desired menu through the display unit 340.

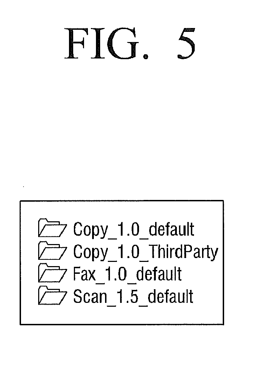

FIG. 5 is a view illustrating an example in which an application and a manual are stored in the storage unit 320.

Referring to FIG. 5, the storage unit 320 may store each of a COPY application manual in version 1.0 which is set as a default manual, a COPY application manual in version 1.0 which is provided by a third party, a FAX application manual in version 1.0 which is set as a default manual, and a SCAN application manual in version 1.5 which is set as a default manual in a folder.

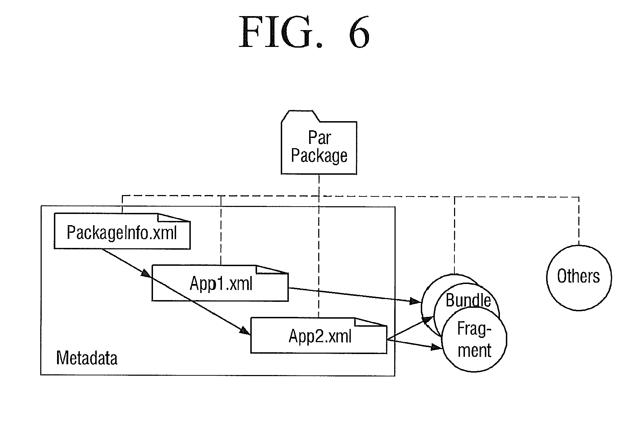

An application and an application manual may be stored in a single folder, which will be explained later with reference to FIG. 6.

Various exemplary embodiments for selecting a manual on an image forming apparatus will be explained with reference to FIGs. 4 and 5.

According to an exemplary embodiment, the image forming apparatus 300 may select a manual automatically.

If it is determined that a manual corresponding to information on an application is stored, the control unit 330 may automatically load the manual corresponding to the application information.

If it is determined that a manual corresponding to information on an application is not stored, the control unit 330 may automatically load a default manual. However, the control unit may automatically load a first page of the default manual.

According to another exemplary embodiment, the image forming apparatus 300 may select a manual manually.

To be specific, the control unit 330 may prioritize for display application information, and then load a requested manual.

In this case, the priority for display is set on the application, and then a manual may be selected in the order of a name, a version, a provider, and a page, for example. The priority for display may be changed by a user.

If a manual is manually selected based on the priority, the image forming apparatus 300 may display the manual on the display unit 340, and thus a user may recognize the manual.

If it is determined that a manual corresponding to application information is not stored when a manual is manually selected based on the priority, a manual similar to a requested manual may be displayed.

FIG. 6 is a view provided to explain the operation of Par package according to an exemplary embodiment.

Referring to FIG. 6, to add a manual of a received application, the image forming apparatus 300 may separately install an application and a manual corresponding to the application, but it is preferable that the image forming apparatus 300 may integrally install an application and a manual corresponding to the application in a single folder.

The Par package includes a received bundle, a fragment, and an XML file, and installs an application and an application manual using information on the received bundle, the fragment, and the XML file. The Par package may install the received application and manual in a file format of 'jar'.

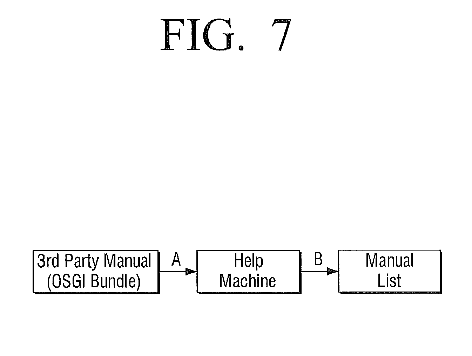

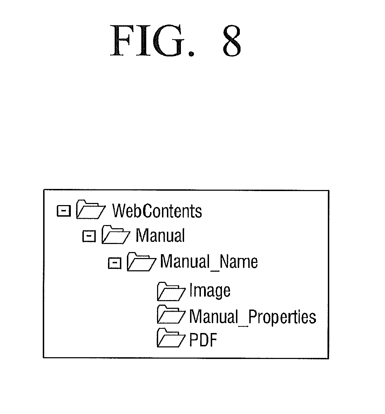

FIG. 7 is a view provided to explain the operating principle of an image forming apparatus according to an exemplary embodiment, and FIG. 8 is a view illustrating the detailed structure of a manual which can be displayed on an image forming apparatus.

Referring to FIG. 7, the process A represents the operation of registering, that is, storing, a received manual into the image forming apparatus 300. The received manual may be a manual which is manufactured by another manufacturer, not the manufacturer of the image forming apparatus 300. Such a manual may be used in a Help machine of the image forming apparatus 300 as the manual is registered as open service gateways initiative (OSGi) bundle.

The process B represents the operation that a user selects a list of manuals registered into the image forming apparatus 300.

In more detail, referring to FIGs. 3, 7 and 8, an application and an application manual are received from a reception unit 310 of the image forming apparatus 300.

Then, as shown in FIG. 8, a manual file is converted to be in a format displayable on the image forming apparatus 300. Such a conversion is necessary to add the received manual to a default manual of the image forming apparatus 300.

To be specific, if the received manual file is not supported by the image forming apparatus 300, the manual file may be converted into a file which has 'properties' as a filename extension.

If the received manual is an Excel file, the Excel file is recorded in the property file in the order of row. That is, the Excel file may be converted into a property file. If the received manual is a portable document format (PDF) file, the PDF file may be converted into a JPEG image format.

The converted manual is stored in each folder as shown in FIG. 8. Herein, a manual name and version information are stored in 'Manual_Name', the JPEG image extracted from the PDF file is stored in 'Image', a property file having the manual information is stored in 'Manual_Property', and a PDF manual is stored in 'PDF'.

After this, the application sensor 331 registers an application as a bundle, and converts the application to have 'jar' as a filename extension so that the converted application can be used in the image forming apparatus 300.

Such a format conversion of an application manual may be performed manually by a user, or automatically using an execution file.

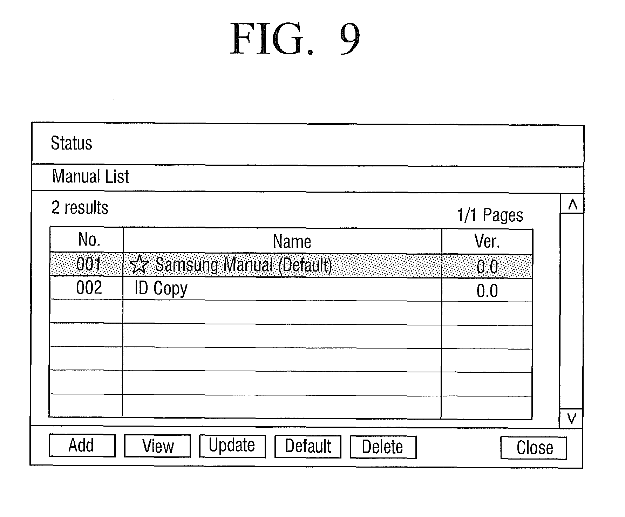

FIG. 9 is a view illustrating a display unit according to an exemplary embodiment.

Referring to FIG. 9, the display unit 340 may display a plurality of manuals. In this situation, the display unit 340 may display a manual together with application information such as a name, a manufacturer, and a version. In addition, the display unit 340 may display a default manual together with a star icon.

The display unit 340 may display a list of application manuals which are selected by a user or which are currently being executed. Alternatively, the display unit 340 may display a list of application manuals stored in the storage unit 320.

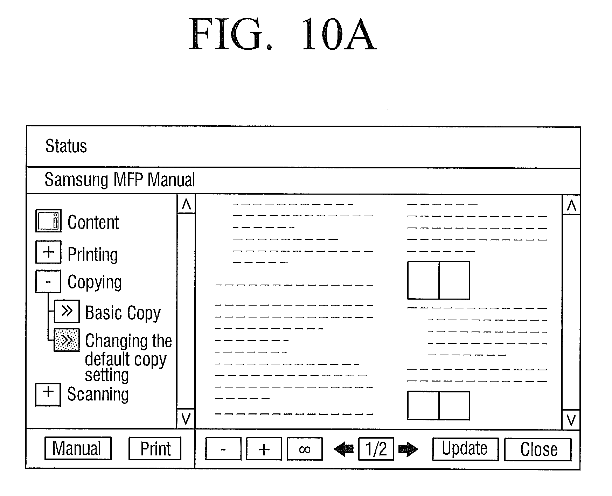

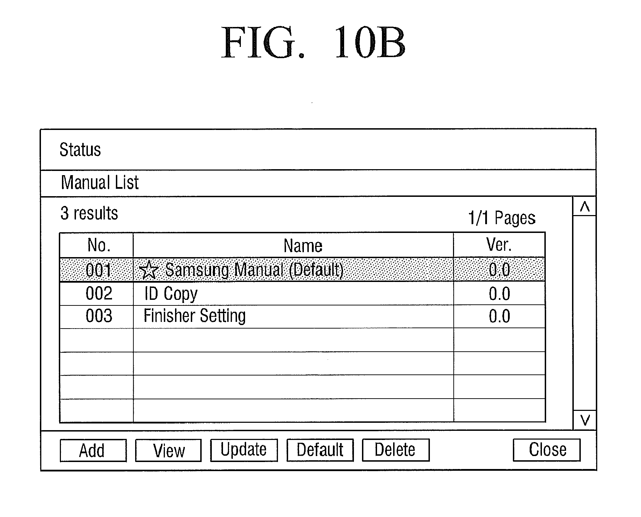

FIGs. 10A and 10B are views illustrating examples of displaying a manual on a display unit.

Referring to FIG. 10A, items such as 'Printing' and 'Copying' which can be applied to a plurality of applications are displayed on an area of the display unit 340. If a user selects a sub item of the item, detailed information on the selected sub item may be displayed on an area of the display unit 340.

A user may operate a manual in various manners such as an enlargement, a reduction, a page change, and an update.

The display unit 340 may provide a button or a key which permits a change of a default manual.

As shown in FIG. 10A, generally, information on a manual corresponding to an application is provided. However, if a user presses a button 'Manual List', a list of manuals may be provided as shown in FIG. 10B. A user may check detailed information of a manual by selecting a particular manual and then pressing a button 'View'.

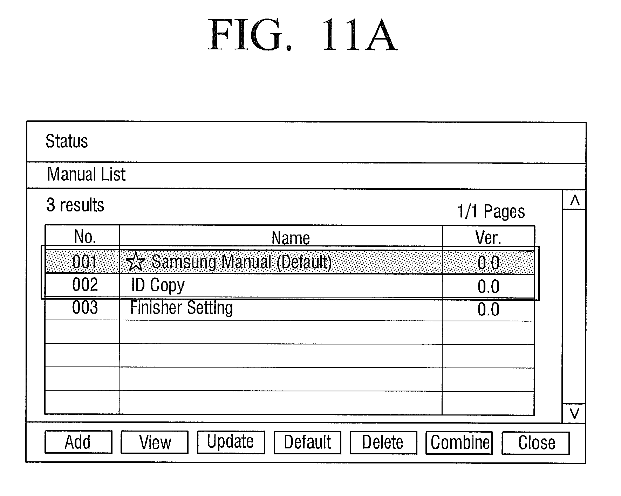

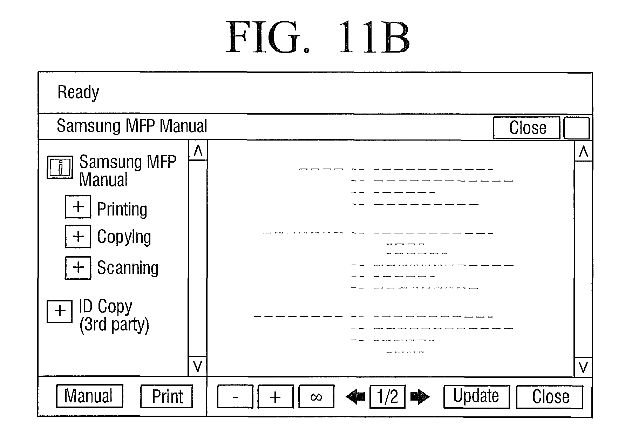

FIGs. 11A and 11B are views provided to explain the operation that the display unit 340 combines manuals according to an exemplary embodiment.

Referring to FIG. 11A, if a received manual and a default manual of the image forming apparatus 300 are separately provided on the display unit 340 of the image forming apparatus 300, a user needs to select a desired manual on the display unit 340 in order to read an explanation regarding a desired application, which causes inconvenience to a user.

Accordingly, if a user inputs a command to combine manuals through the input unit 350, the image forming apparatus 300 may combine a default manual with a loaded manual under the control of the control unit 330. Then, the display unit 340 may display a combined manual.

The command to combine manuals may be input through a key 'Combine' provided on the display unit 340 which is configured as a touchscreen as shown in FIG. 11A.

A default manual may be displayed together with a specific icon. It is understood that a default manual may be displayed in different color or font with other manuals.

FIG. 11B shows an example in which 'Samsung Manual (default)' and 'ID COPY' manual are displayed on the display unit 340 as a single manual.

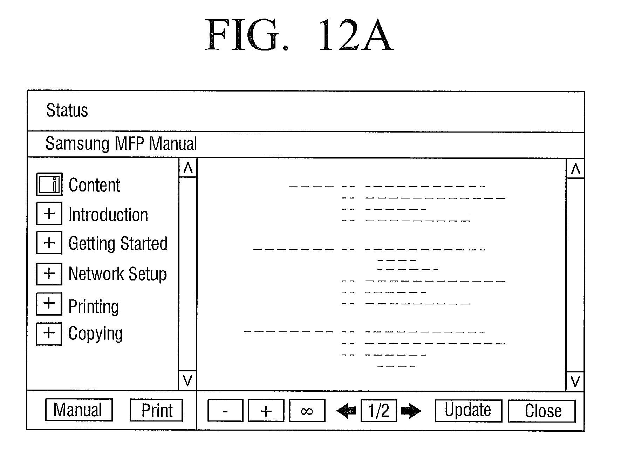

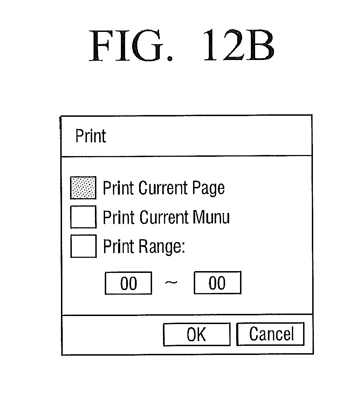

FIGs. 12A and 12B are views provided to explain the operation where the display unit 330 prints a manual according to an exemplary embodiment.

Referring to FIG. 12A, it is not easy for a user to view a manual having a plurality of pages on the display unit 340 of the image forming apparatus 300. Accordingly, the control unit 330 may control the print engine unit 360 to print the content of the manual on a printing medium.

In this case, a current page (FIG. 12B) of the manual or a current application (that is, menu) of the manual is printed through the display unit 340. Alternatively, a page range of the manual may be specified to be printed.

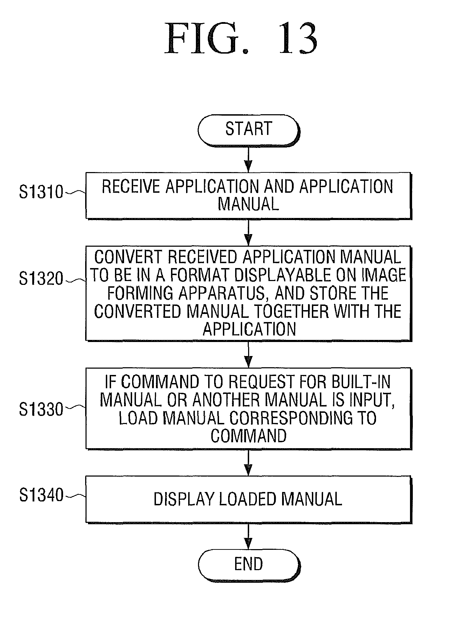

FIG. 13 is a flowchart provided to explain a method for providing a manual of an image forming apparatus according to an exemplary embodiment.

The image forming apparatus 300 may store a built-in application and a build-in manual for the built-in application.

Referring to FIG. 13, in a method for providing a manual of an image forming apparatus according to an exemplary embodiment, an application and an application manual may be received from the reception unit 310 (S1310).

The received manual is converted to be in a format displayable on the image forming apparatus 300, and then the converted manual is stored in the storage unit 320 together with the application (S1320).

In operation S1320, the storage unit 320 may store the converted manual by registering the manual as an OSGI bundle.

If a user inputs a command to request for a built-in manual or another manual through the input unit 350, the control unit 330 may load a manual corresponding to the command (S1330).

Then, the loaded manual is displayed on the display unit 340 (S1340).

The received manual can be converted to a format displayable on the image forming apparatus 300, and thus a user may conveniently use manuals which are provided from an external source on the image forming apparatus 300.

After operation S1310, the control unit 330 may install a received application and a received manual using a Par package.

In operation S1330, the control unit 330 may determine whether a manual which conforms to application information corresponding to the command is stored, and load the requested manual from among the stored manuals according to the determination.

In operation S1330, if it is determined that the manual which conforms to the application information is not stored, the first page of the default manual may be automatically loaded.

In operation S1330, a manual may be loaded according to the priority of application information.

A method for providing a manual of an image forming apparatus may further include the operation of combining a default manual with a loaded manual if a user inputs a command to combine manuals, and displaying the combined manual.

Hereinbelow, overlapping explanations will be omitted.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A method for providing a manual of an image forming apparatus where a built-in application and a built-in (or default) manual for the built-in (or default) application are stored, the method comprising:
receiving an application and a manual for the application;
converting the received manual to be in a format displayable on the image forming apparatus, and storing the converted manual and the application;
loading, if a command to request for the built-in (or default) manual or the converted manual is input, a manual corresponding to the command; and
displaying the loaded manual.

2. The method as claimed in claim 1, wherein the application manual is a plurality of manuals.

3. The method as claimed in claim 1, wherein the storing comprises registering and storing the converted manual as an open services gateway initiative bundle.

4. The method as claimed in claim 1, further comprising:
installing the received application and the received manual using a Par (Parity archive) package.

5. The method as claimed in claim 1, wherein the loading comprises:
determining whether a manual which conforms to information on an application corresponding to the command is stored; and
loading a requested manual from among the stored manuals according to the determination,
wherein the loading comprises:
if it is determined that a manual which conforms to the application information is not stored, automatically loading a default manual.

6. The method as claimed in claim 1, wherein the loading comprises:
prioritizing the application information, and then loading the manual according to the priority.

7. The method as claimed in claim 1, further comprising:
if a command to combine manuals is input, combining the default manual with the loaded manual; and
displaying the combined manual.

8. An image forming apparatus where a built-in application and a built-in manual for the built-in application are stored, the image forming apparatus comprising:
a reception unit which receives an application and a manual for the application;
a storage unit which converts the received manual to a format displayable on the image forming apparatus, and stores the converted manual together with the application; and
a control unit which, if a command to request the built-in manual or the converted manual is input, loads a manual corresponding to the command, and controls a display unit to display the loaded manual.

9. The image forming apparatus as claimed in claim 8, wherein the application manual is a plurality of manuals.

10. The image forming apparatus as claimed in claim 8, wherein the storage unit registers and stores the converted manual as an open services gateway initiative (OSGI) bundle.

11. The image forming apparatus as claimed in claim 8, wherein the control unit installs the received application together with the received manual using a Par (Parity archive) package.

12. The image forming apparatus as claimed in claim 8, wherein the control unit determines whether or not a manual which conforms to information on an application corresponding to the command is stored, and loads a requested manual from among the stored manuals according to the determination,
herein if it is determined that a manual which conforms to the application information is not stored, the control unit automatically loads a default manual.

13. The image forming apparatus as claimed in claim 8, wherein the control unit prioritizes the application information, and then loads the manual according to the priority.

14. The image forming apparatus as claimed in claim 12, wherein the application information comprises at least one of a name, a version, a provider, and a page.

15. The image forming apparatus as claimed in claim 8, wherein if a command to combine manuals is input, the control unit combines the default manual with the loaded manual, and controls the display unit to display the combined manual.
